# EUROPEAN PATENT SPECIFICATION

(11) **EP 1 660 803 B1**
(45) Date of publication and mention of the grant of the patent: **21.03.2012**
(21) Application number: 04768185.3
(22) Date of filing: 25.08.2004
(51) Int. Cl.: F16L 47/02, B29C 65/02

(54) **METHOD FOR JOINING MULTI-LAYERED PIPE**
VERFAHREN ZUR VERBINDUNG EINES MEHRLAGIGEN ROHRS
PROCEDE DE RACCORDEMENT D'UN CONDUIT MULTICOUCHE

(30) Priority: 26.08.2003 EP 03255286
(43) Date of publication of application: 31.05.2006
(73) Proprietor: GLYNWED PIPE SYSTEMS LIMITED, Kent, TN 13 1SD (GB)
(72) Inventor: Roberts-Moore, Paul, Clive, Staffordshire, WS11 9XT (GB); Bull, Michael, Staffordshire WS11 9NS (GB); Lilley, Graham DI, - (PL)
(74) Representative: Townsend, Victoria Jayne
(86) International application number: PCT/GB2004/003629
(87) International publication number: WO 2005/019718

(56) References cited:
- WO-A-80/02124
- US-B1- 6 585 924
- PATENT ABSTRACTS OF JAPAN vol. 0176, no. 33 (M-1513), 24 November 1993 (1993-11-24) -& JP 05 196187 A (SEKISUI CHEM CO LTD), 6 August 1993 (1993-08-06)

## Description

This invention relates to the joining of multi-layered pipes.

The use of coaxial multi-layered pipes is well known. Such pipes are commonly used to simultaneously employ desirable properties of two or more materials in a given application. For example, in order to convey a corrosive chemical, a pipe construction material to be in contact with the chemical would need to be resistant to that chemical, however, the chemical-resistant material may not have sufficient mechanical strength to contain the fluid pressure needed to convey the chemical along the pipe. This problem is addressed by introducing a second layer of pipe construction material separated from the chemical by the first, chemical-resistant layer. The second layer need not be resistant to the chemical but is selected to have the mechanical properties needed to contain the chemical as it is conveyed through the pipe line. In the foregoing example, the first (or inner, chemical-resistant) layer may be a polymer and the second (or outer, mechanically reinforcing) layer, a metal, although other combinations of materials are also possible.

Often, due to the very different chemical nature of adjacent layers in a multi-layer pipe, the layers of the pipe cannot be bonded together. In such a situation, a third or tie layer is introduced between the first and second layer, the tie layer having chemical properties which enable it to be bonded directly with each of the adjacent layers.

It will be understood that multiple additional layers optionally interspersed with additional tie layers may be included in a multi-layer pipe as previously described.

It will be appreciated that, particularly in hostile environments, there is a high potential for delamination of the multi-layered pipes.

Conventionally, multi-layer pipes of the type previously described are connected by means of mechanical fittings. These mechanical fittings are typically configured to retain the layers of the pipe in compression with each other and so prevent delamination of the pipe. Such fittings may comprise a "push-fit" annulus for receiving the pipe or a crimping mechanism for crimping the pipe ends.

It is known to connect single layer plastic pipes using thermal fusion couplings. The latter include a coiled length of metal which is bedded into the coupling during manufacture. The coupling is then fitted around a pipe and an electrical current is passed through the metal coil. The heat produced by the electrical current causes local melting and fusion of the coupling to the outer surface of the pipe. Electrical current may be passed directly through the coil (this is known as electro-fusion) or may be induced into the coil by means of a second coil positioned around the first, the second coil carrying an alternating electrical current (this is known as fusion by induction heating). It will be appreciated that different coil configurations may be more suited to one of electro-fusion or induction heating than the other.

The use of conventional thermal fusion coupling techniques in multi-layer pipes has been considered but is disadvantageous as these techniques serve only to join couplings to the outer layer of the multi-layered pipes providing no means for preventing delamination of the pipes. Furthermore, these couplings require a relatively complex, multi-stage construction rendering them slow and expensive to manufacture.

Electro-fusion coupling has been used in relation to plastic dominant multi-layered pipes. The latter typically comprise a thick inner layer of plastics material covered by a thin foil of metal which is in turn coated with a thin, outer layer of plastic material. The thinness of the outer layer and inclusion of the metal layer renders it difficult to achieve good fusion between the pipe and the coupling. The problem is addressed by removing the outer plastic and metal foil layer and attaching the coupling directly to the inner, thicker plastic pipe. Although such an arrangement does partially protect the pipe end from delamination by preventing exposure to pipe contents, it is only suitable for plastic dominant composite pipes where the metal layer is close to the outer surface of the pipe. Furthermore, the arrangement does not protect against exposure to the external environment which may be as damaging to the unprotected pipe end as the pipe contents.

JP05196187 of Sekisui Chem Co Ltd discloses a generic method for joining composite, predominantly metal pipes coated with a synthetic resin layer. The method induces heat into the exothermic layer by means of a coil wound around the pipe ends and coupling to be joined.

WO 80/02124 discloses a clamp for inducing a current in an electro magnetic material which is positioned between thermoplastic pipes or a thermoplastic pipe and pipe coupling. The introduced electromagnetic material causes local melting of the thermoplastic materials surrounding it encouraging them to fuse.

The present invention aims to provide more cost effective, alternative methods for joining multi-layered pipes and to reduce the incidence of delamination in pipes after coupling.

In accordance with the present invention there is provided a method for joining a multi-layered pipe to a coupling, the multi-layered pipe including at least an outer and an inner layer of thermoplastic material and a central layer of metal or other conductive material which is no more than 2mm thick and the pipe having an outside diameter of from 20mm to 110mm, the coupling comprising a unitary piece of thermoplastic material and the coupling comprising a thermoplastic material, the method comprising;
providing a coupling including a recess for receiving an end of a multi-layered pipe, the recess being configured, to permit the coupling to contact the inner and outermost layers of a multi-layered pipe received in the recess;
fitting an end of the multi-layered pipe into the recess of the coupling;
introducing heat to both the coupling and either the inner layer alone or both the inner and outer layers of the multi-layered pipe sufficient to cause local melting at the interface between the coupling and either the inner layer alone or both the inner and outermost layers characterised in that the step of introducing heat involves encircling the assembled pipe end and coupling with an electrically conductive coil; and passing an alternating current through the electrically conductive coil sufficient to cause mutual induction in the central layer of the multi-layer pipe wherein the electrically conducting coil is provided in the form of a flexible wire which is wound about a cylindrical clamp, the cylindrical clamp having an inner diameter sized to receive the outside diameter of the pipe and the outside diameter of the fitting, the clamp being engaged around the outside diameter of the pipe and the outside diameter of the fitting.

It will be appreciated that, by using a coupling which interfaces with both the inner and outermost layers of the pipe, the ends of all layers of the pipe can be sealed within the pipe-coupling join. It is recognised though that for certain sizes and sections of pipe it may only be possible to weld/fuse to the inner pipe layer. This is considered acceptable as the coupling still provides protection of the pipe end from exposure to both the pipes contents and external environment, and the single weld is of sufficient mechanical strength to contain the pipe contents.

Optionally the inner and/or outermost layers of the pipe comprise ethylene/octane copolymers known as polyethylene of raised temperature performance ("PE-RT"). Such polymers are chosen to operate over a wide range of temperatures from sub-zero to elevated temperatures thus enabling a single system to be adaptable to a number of applications.

These polymers do not require any subsequent curing process thus overcoming any cross linking/curing issues associated with cross linked polyethylene and readily lend themselves to thermal jointing techniques. Alternative materials for the innermost and outermost layers include but are not strictly limited to; MDPE, HDPE and PP. The innermost and outermost layers may comprise the same or different materials.

Desirably, the outermost layer has a thickness in the range from 0.4mm-5.0mm for pipes with outside diameters of 20mm to 110mm. The inner layer desirably has a thickness of from 0.4 mm to 5.0 mm for pipes with outside diameters of 20mm to 110mm.

The recess of the coupling is desirably an annular recess defined by an outer and an inner wall (or spigot). The inner wall desirably has a thickness of from 2.0mm to 9.0mm for use with pipes of outside diameters of 20mm to 110mm. Such sections are sufficient to prevent deformation, buckling or collapse during the welding/fusion process as well as providing the required level of pressure resistance should the pipe end not be fully inserted into the annular recess.

The coupling optionally comprises the same material as is used for one or both of the innermost and outermost layers of the pipe, though this is not essential. Whether or not the same material, the material of the coupling is selected to be compatible with the materials of the innermost and outermost layers in the sense that it will fuse with them under appropriate conditions of temperature and pressure.

Desirably the outer wall has a thickness of from about 2.0mm to about 9.0mm for use with pipes of outside diameters 20mm to 110mm.

The coupling with the pipe end received in the recess is surrounded by an electrically conducting coil. An alternating electrical current is passed through the coil. The passage of the current through the coil induces a current in the conducting layer of the pipe. This current causes local heating sufficient to melt the surrounding thermoplastic layers of the pipe and the thermoplastic of the coupling, thus the pipe and coupling become thermally bonded.

Optionally, where this method is to be used, the central layer of the pipe comprises Aluminium. In another option, the central layer comprises a ferromagnetic material such as magnetic stainless steel. The latter is advantageous in that the induction heating of such materials is more efficient than for most non-ferromagnetic materials, thus less power is required to cause local melting of the pipe and coupling. Since the current required in the work coil is consequently reduced, design options for the work coil are increased permitting more portable and lower cost induction welding units to be used.

Using known solid state induction techniques, the heating parameters for the method such as, cycle time, current frequency and power input can be accurately controlled allowing a high degree of repeatability contributing to consistency of joint integrity and a reduction in rejects.

Using a pre-programmable variable power input, the aluminium interface temperature is desirably maintained at between about 200 °C and 260°C. The amount of energy needed to achieve the temperatures can be determined from the power applied to the electrically conducting coil, the surface area of aluminium in the central layer to be heated, and the weld cycle time.

The weld cycle time is desirably in the region 10s to 300s depending upon pipe diameter, around .10s for the smallest diameters and 300s for largest.

Where the central layer comprises aluminium, the operating frequency of the electrically conducting (work) coil is desirably between about 40kHz and 60kHz again depending on pipe diameter. It will be appreciated that the optimal operating frequency used will differ for different metallic materials. The frequency chosen reflects the inherent characteristics of the materials structure and is influenced by the materials inherent conductivity and resistivity and whether or not the material is magnetic. Determination of an appropriate frequency for a pipe and coupling of given structure is assumed to be well within the capabilities of the skilled reader.

The work coil is supplied with an alternating current and corresponding voltage by induction welding equipment. The induction welding equipment typically comprises of an induction power supply unit, connected to a remote output circuit by an inter-connecting powder lead. The work coil connects directly to the remote output circuit. The alternating current in the work coil induces a magnetic field that surrounds the work coil and any object, in this case the metal layer within the pipe, that is located within the work coil. The magnetic field sets up secondary eddy currents in the metal layer of the pipe which, through resistive effects, cause the metal to heat.

The induction welding equipment is desirably of a design which is portable and lightweight. In one embodiment, this is achieved by designing the internal electronic circuitry to operate from a 110V AC power input such that the need for any internal voltage transformer as used in conventional induction welding equipment is removed. (It will be appreciated that the transformer is the heaviest item within a conventional induction welding power supply unit.) The supply voltage is transformed using industry standard portable transformers, for example of the type commonly used in the construction industry. The resistive characteristics of the internal electronic components of the induction power supply unit are selected to minimize the heat generated by the components and the consequent amount of cooling required. Whilst, in conventional systems, water cooling of the induction power supply unit is necessary to remove the excess heat, in the present embodiment, cooling is achieved through strategic, direct assembly of the internal electronic circuitry onto a lightweight aluminium finned heat sink which also forms an integral part of the superstructure of the induction welding power supply unit. As a result of the novel design described, the weight of the induction welding power supply unit is typically no greater than 15kg compared to from 35 to 50kg for conventional equipment having the same maximum power rating. The inter-connecting power leads of the novel equipment enable an operator to perform a number of welds at a distance from the induction welding power supply unit. This significantly reduces the effort required by the operator in carrying equipment throughout an installation and increases mobility. The length of the inter-connecting power lead is typically 3-5m. It is necessary to compensate for the power losses along the inter-connecting power lead with the use of a specially designed remote output circuit box. This is air-cooled and typically weighs 1-3kg and is considerably smaller than the induction welding power supply unit.

Conveniently the electrically conducting coil can be provided in the form of a flexible wire which can be coiled around the pipe in an appropriate configuration to provide the desired heating effect. The efficiency of the heating process may be enhanced through the use of a special construction of wire, commonly referred to as litz wire. The wire is constructed from a number of individually insulated copper wires that are twisted or braided together. The construction of the wire reduces eddy current losses and skin effect problems to the extent that efficiencies are increased and heat build up is minimised. This enables the work coil to operate without water cooling which is a normal requirement for standard copper work coils. The fact that the coil is capable of maintaining a safe working temperature, without the use of an artificial cooling media, is advantageous because an installer does not require the use of a water supply which can be difficult to source on a new build installation. It will be appreciated that the optimum configuration for the coil can be determined from the coupling ratio of the coil to the pipe (i.e. the inner diameter of the coil and the outer diameter of the metal layer of the work piece) from the parameters of the electrical supply to be provided to the coil and the heating characteristics of the central metal layer.

Accurate positioning of the flexible coil may be achieved by providing a two part cylinder which is sized to clamp around the pipe and fitting. The two parts of the cylinder may be hingedly connected or may be fastenable together by any conventional, mechanical means. One or more guides may be provided in or on the outer surface of the cylinder to receive the wire and hold it in an appropriate configuration. For example, a guide may be provided in the form of a helical groove machined into the outer surface of the cylinder at an appropriate depth and with an appropriate pitch for receiving the flexible wire. Whilst a helical configuration is convenient, it will be appreciated it is not essential. Once the wire is held in place in the guide or guides, it is desirably clamped in place by a restraining device, optionally in the form of a second cylindrical clamp. Other suitable restraining devices include but are not strictly limited to a strap or a clip.

The cylinder comprises a material which has a relatively low heat conductivity, which is not inductive and which is not compatible (i.e. it will not fuse) with the materials of the coupling and pipe under the conditions applied for fusing the coupling to the pipe. For example, the material of the cylinder may have a melting point which is significantly higher than that of the coupling/pipe. Optionally, the cylinder may be coated with a material which is incompatible with those of the coupling/pipe, its body comprising a different material. The incompatible material of the cylinder or its coating may, optionally, comprise a crystalline engineering thermoplastic material for example nylon or acetal.

It will be appreciated that the flexible wire when combined with a variety of differently sized, helically grooved cylindrical clamps, is adaptable for use with pipes in a wide range of diameters (e.g. from 20-110mm).

As an alternative to the flexible coil, a cylinder clamp similar to that already described may be provided with an integral coil. This does not necessarily need to be a helical coil - other configurations may be used. The coil is moulded or bonded into position in the cylinder which is designed in such a manner that it may be placed around the pipe/fitting joint, for example it may consist of two half shells. When the cylinder is reformed (i.e the two parts are closed or fastened together), the corresponding pieces of coil are matched up thereby reforming the coil. Optionally, in this arrangement, the ends of the coil may be terminated in a specific manner so as to ensure intimate contact of the ends of the coil when it is reformed.

Heat generation by mutual induction is time and energy efficient, thus joining costs and process times can be minimised. The process is clean and non polluting producing no harmful emissions, noise or waste heat which may significantly affect the surrounding environment and as such is safe and not unpleasant for installers to use.

It will be appreciated that other means could be used to create heat in a metallic or other conductive layer which could, in turn, conduct heat to surrounding thermoplastic layers and a coupling. For example, current may be applied directly to the metal or conductive layer. The metal layer may also be employed to conduct heat from another heat source and to the thermoplastic layers and coupling. Other heating means and methods will no doubt occur to the skilled addressee without departing from the scope of the invention as defined by the appended claims.

In another alternative suitable for use in pipes with or without a metallic/conductive middle layer, the coupling and inner and outermost layers of the pipe may be heated using socket fusion. Using heating tools shaped to complement the cross section of the coupling and the pipe end, the tools are placed into the recess of the coupling and over the ends of the pipe extending some way along the exposed surfaces of the inner and outermost pipe layers.

Heat is applied to the tools which in turn heat by conduction, the section of the coupling defining the recess, and the exposed surfaces of the pipe. Heat may be applied to the heating tools when in situ or prior to application to the coupling and pipe end. Once local melting of the coupling and pipe begins to occur, the heating tools are removed and the pipe end is inserted into the recess of the coupling. In this alternative, the recess of the coupling is desirably sized to close tolerances to ensure an interference fit of the pipe end in the recess. This ensures a joint pressure sufficient to bond the pipe end with the coupling when inserted.

Any known method can be used to heat the heating tools, for example (but not strictly limited to); resistance heating, heating by conduction and heating by induction.

Heating parameters for heating the tools such as heat soak time and temperature can be accurately controlled allowing a high degree of repeatability of the method contributing to consistency of joint integrity and a reduction in joint rejection.

In common with the first embodiment, this process is a clean and non polluting producing no harmful emissions, noise or waste heat which may significantly affect the surrounding environment and as such is safe and not unpleasant for installers to use.

In further embodiments of the invention, pipes of multi-layer construction can be joined using fittings of the design as previously described and any method which creates sufficient heat to melt exposed thermoplastic surfaces of the pipes and fittings which, when placed in contact with each other fuse to form a joint which encloses and protects the pipe end. Such methods already known in field of pipe joining include (but are not strictly limited to) ultrasonic and spin welding.

The method of the invention provides a homogenous weld about the pipe end enclosing the ends of each of the layers of the pipe and which is less susceptive to thermal effects such as shrinkage or expansion often encountered in the use of mechanical fittings and which can ultimately result in leakage of materials carried in the pipe. As the bore of the pipe is included in the seal and the pipe end face isolated from internal fluid pressures of fluids conveyed through the pipe, the incidence of pipe end delamination is, consequently, eliminated. Enclosing of the pipe ends and in particular, the end of the metal layer also serves to prevent contamination of the contents of the pipe which might occur were the metal layer exposed to contents and to corrode and breakaway or dissolve in solution in the pipe contents.

The method has application in joining of pipes to couplings of all types including but not strictly limited to; T-junctions, elbows, 45° elbows, cross pieces and Y-pieces. The couplings are conveniently provided with annular recesses in their open ends configured to receive the ends of pipes to be joined. The previously described coupling configurations ensure that the bore of the pipe is always included in the seal and assists in the elimination of pipe end delamination. It is to be understood that the term coupling as stated herein is intended to include pipe end fittings for closing the ends of pipes as well as fittings for joining pipes together.

The resulting joint is considerably more leak proof than joints provided by mechanical methods such as mechanical crimping.

To assist the reader in understanding the invention, there follows a description of some embodiments of pipes and couplings to which the invention may be applied and of apparatus which may be used to perform the invention.

The following Figures are referred to in the discussion which follows:
Figure 1 illustrates an axial cross section through a multi-layered pipe to which the present invention may usefully be applied;
Figure 2 illustrates the principle of mutual induction as it occurs in a metallic tube surrounded by an induction coil having a current passed through it.
Figure 3 illustrates a pipe and coupling being joined in accordance with the method of the invention.
Figure 4 illustrates a variety of configurations of pipe coupling in accordance with the invention.
Figure 5 illustrates schematically a first coil and clamp arrangement which may be used in embodiments of the invention where heat is generated through electromagnetic induction of the central , layer.
Figure 6 illustrates schematically a second coil and clamp arrangement which may be used in embodiments of the invention where heat is generated through electromagnetic induction of the central layer.
Figure 7 illustrates an induction welding system suitable for use in heating the central metal layer of Figures 1 and 2.
Figure 8 illustrates a set of heating tools suitable for use in implementing an embodiment of the methods of the invention.

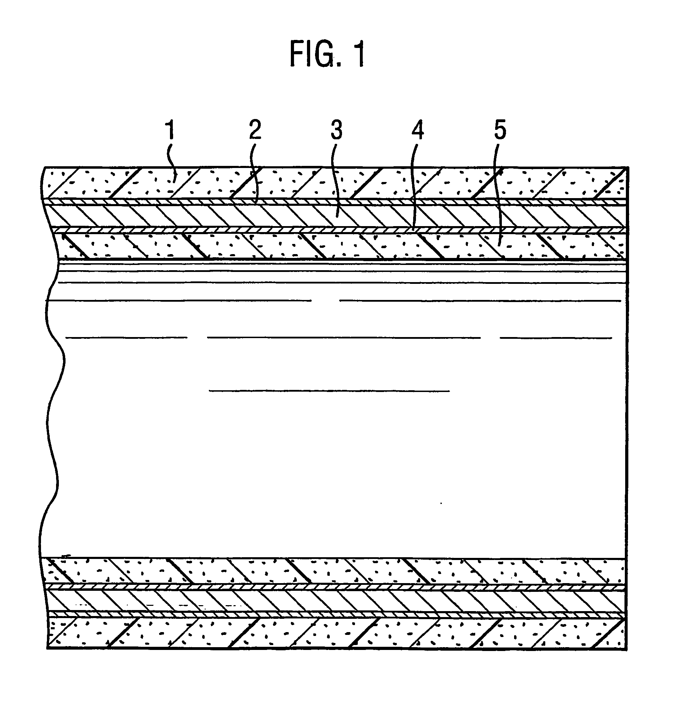

As can be seen from Figure 1, a multi-layered pipe to which the method of the invention may be applied comprises five coaxial layers; an outermost polymer layer 1, central metallic layer 3, and an innermost polymer layer 5; an outer tie layer 2 located between the outermost polymer layer 1 and the central metallic layer 3 and an inner tie layer 4 located between the central metallic layer 3 and the innermost polymer layer 5.

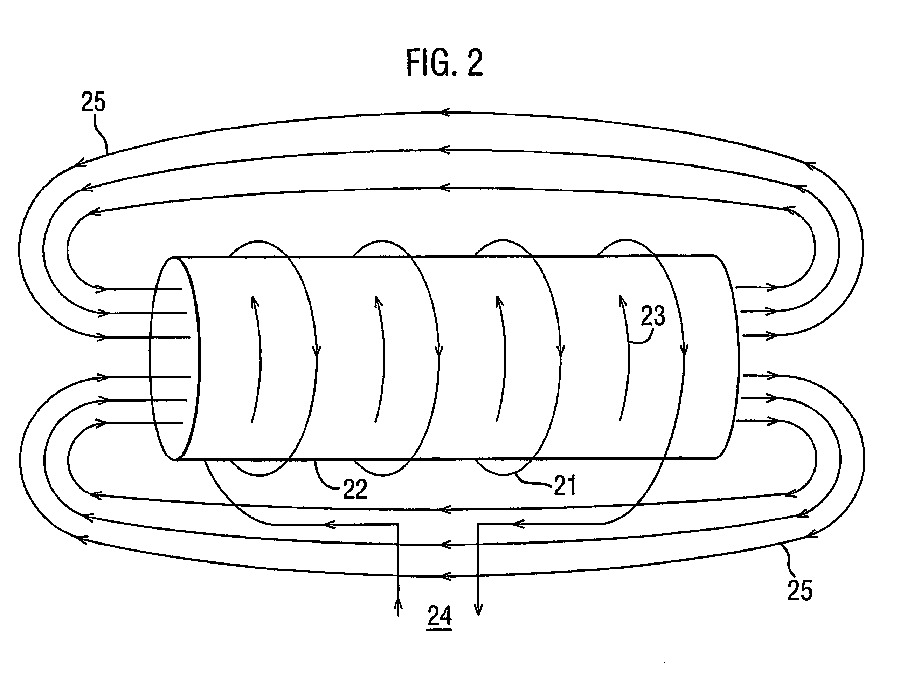

Figure 2 illustrates a primary induction coil 21 encircling a tubular metal core 22. A current is induced into the primary coil by a supply 24. A magnetic B-field 25 results from the current in the primary coil 21 which in turn induces in the tubular metal core a secondary current 23. It will be appreciated that due to resistance in the metal material of the tubular core 22, a heating effect will result from the secondary current 23.

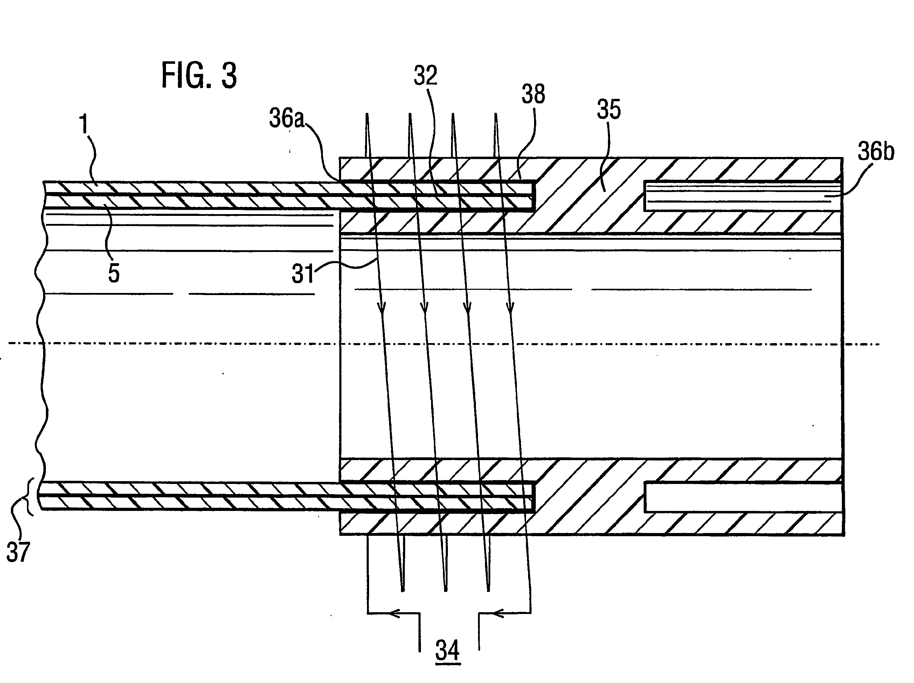

In the left hand side of Figure 3 there can be seen a multi-layered pipe of similar construction to that shown in Figure 1. To the centre and right of the Figure is shown a coupling 35 which essentially comprises a hollow tubular moulding of thermoplastic material having an annular slot 36a, 36b provided in each end. The multi-layered pipe 37 is slotted into the annular slot 36a. The assembled pipe and coupling are positioned inside a primary induction coil 31 provided with an alternating current by current supply 34. As a consequence of the current 34 in the primary coil 31, there is induced in a portion 32 of the central metallic layer 3 of the multi-layered pipe 37 a secondary current. The secondary current in turn produces local heating which leads to a region 38 of local melting of the coupling 35 and the innermost and outermost thermoplastic layers 1, 5 of the multi-layered pipe 37. The molten layers bond and on removal of the assembly from the primary coil, there is provided a fully bonded pipe-coupling join. The process can be repeated with a second pipe in the second annular slot 36b to provide a securely joined pipe.

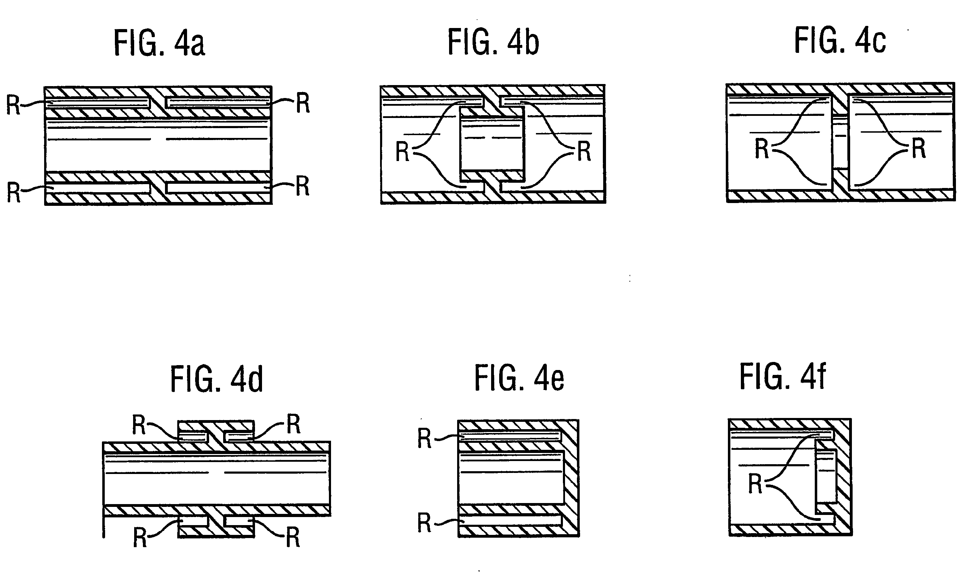

Figure 4 shows in longitudinal section a variety of pipe couplings in accordance with the invention. The couplings generally comprise a single unitary piece of hollow circular cross section. Figure 4a shows a two ended pipe coupling for joining a pair of pipes in parallel. In cross section, the shape of the coupling can be seen to comprise four "U"s arranged in two pairs, end to end. Each U shaped section defines part of an annular recess R for receiving an end of a pipe. The coupling of Figure 4b is broadly similar to that of Figure 4a but differs in that rather than U-shaped, the four sections are "J" shaped, thus the part of the coupling which sits adjacent the exposed surface of the innermost layer of an inserted pipe is shorter in length than that which sits adjacent the exposed surface of the outermost pipe. Figure 4c shows a further variation wherein the sections are essentially "L" shaped. The short end of the L is of sufficient length to extend across the end surfaces of each layer of the pipe but does not extend into the bore of the pipe when the pipe is inserted.

Figure 4d illustrates an arrangement similar to that of Figure 4b, however, in this embodiment, the longer part of the J sits adjacent the exposed surface of the innermost layer of the pipe when the pipe is inserted. Figures 4e and 4f illustrate pipe end caps corresponding to the couplings of Figure 4a and Figure 4b. It will be appreciated that the couplings may take other forms, for example, elbow joints, T-joints and Y-joints. Couplings of the invention are characterised by their unitary nature and the provision of a recess which accommodates the ends of both the inner and outermost layers of a multi-layered pipe.

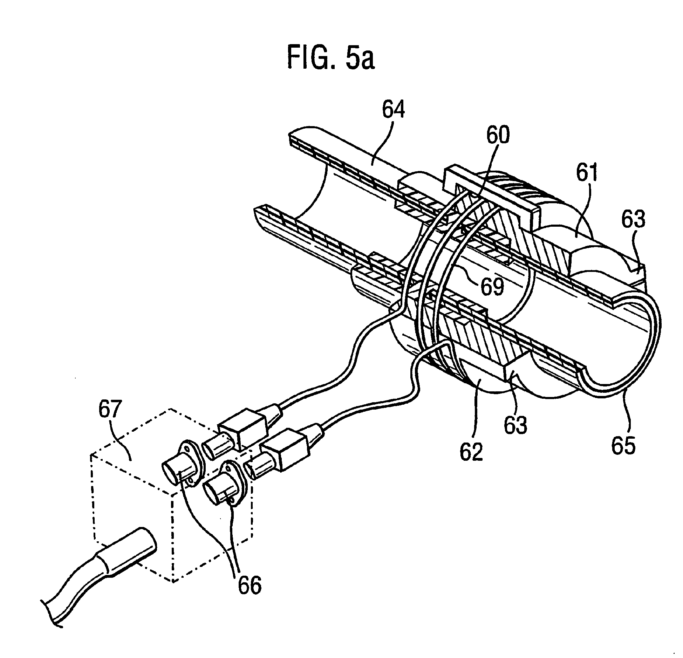

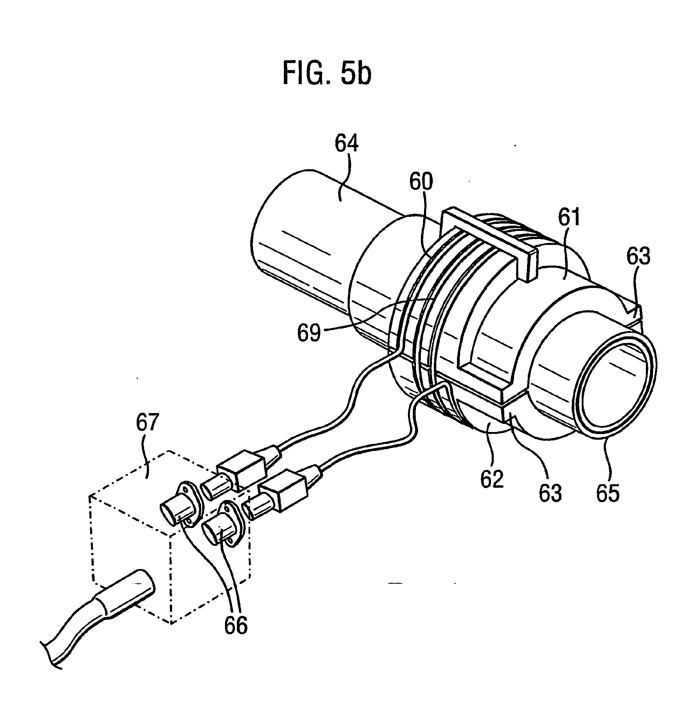

As can be seen in Figure 5 there is provided a substantially cylindrical clamp comprising an upper 61 and a lower 62 part each having a lipped portion 63 extending radially outwardly and longitudinally of the cylinder parts 61, 62. Two opposing lipped portions 63 of the respective cylinder parts 61, 62 may, optionally, be hinged together. As an alternative to hinging, the respective lip portions may be joined together by mechanical means, for example by bolts or clips (not shown).

The two parts are joined so as to enclose two pipe ends 64, 65 which in turn are connected by a thermoplastic coupling (not shown). With the two parts 61, 62 joined together, a flexible wire 69 is coiled around the outer surface of the closed clamp and is received in a helical groove 60 provided in the outer surface of the clamp.

The ends of the wire 69 are provided with terminals 66 which, in turn, can be plugged into sockets of a remote output circuit 67.

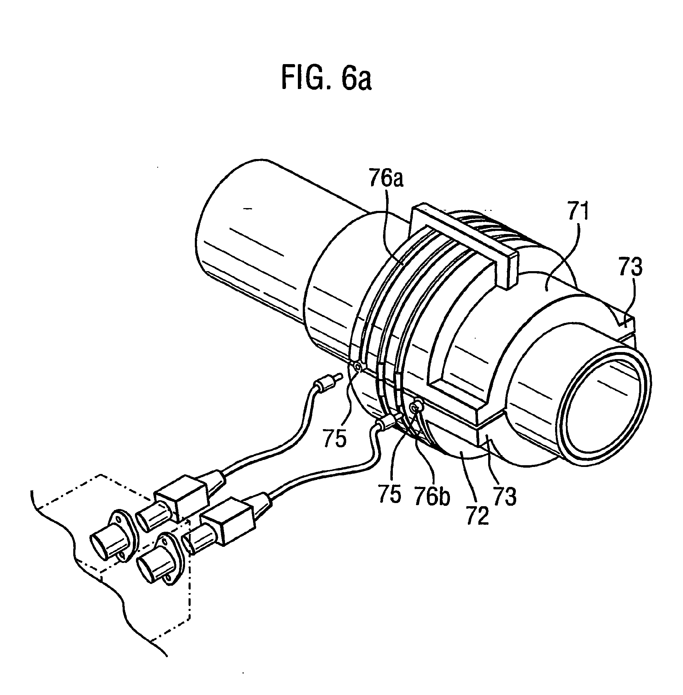

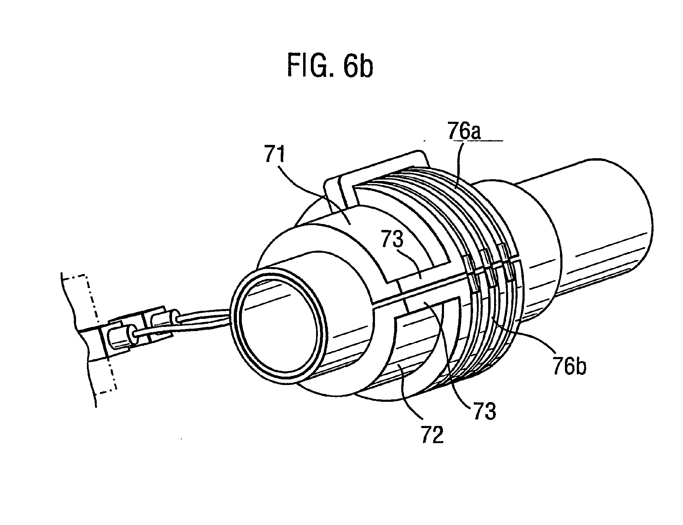

In Figure 6 two cylinder parts 71, 72 are again provided, each with a lipped portion 73 extending radially outwardly and longitudinally of the cylinder. The arrangement differs from that of Figure 6 in that each cylinder part 71, 72 has integrally formed therein half of a coil 76a, 76b. When the two parts are properly aligned, the two half coils engage together to form an induction (work) coil. The work coil is provided with two end terminals 75 which can be connected to a remote output circuit 67 using similar end terminals 66 as shown in Figure 5.

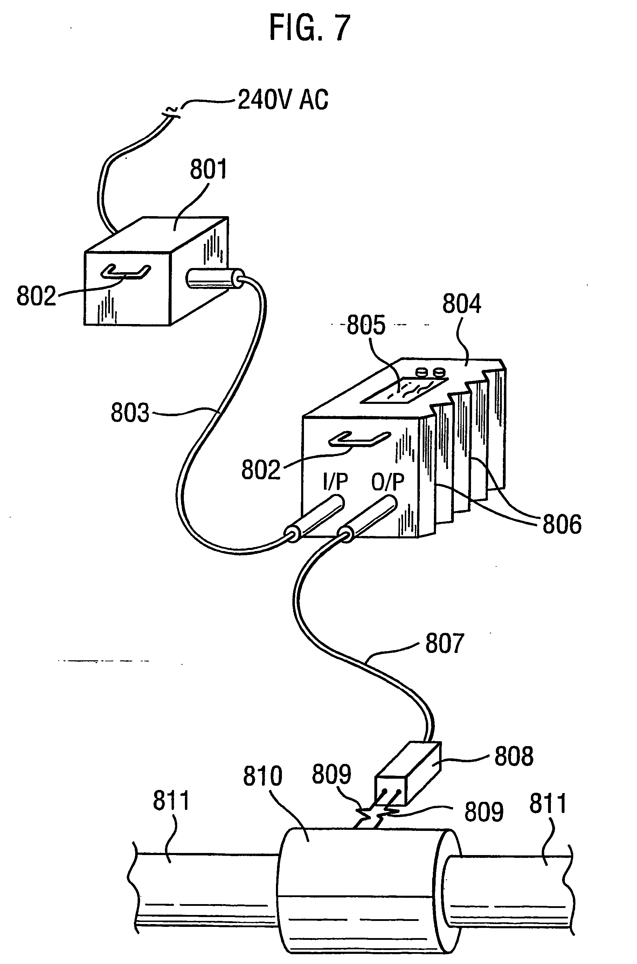

Figure 7 shows schematically an embodiment of induction welding equipment specifically designed for use in the field. As can be seen, the induction welding equipment, in use, is connected to a standard 240/110V transformer 801 which receives an input from a 240V AC power supply. The transformer 801 is embodied in a box having a total approximate weight of around 12kg. The box is provided with one or more handles 802 for easy carriage by an operator.

A cable 803 capable of delivering 110V is provided between the transformer 801 and a portable power induction power supply unit 804. The 110V AC power supply is received as an input to the induction power supply unit 804 via cable 803. The induction power supply unit 804 is embodied in a lightweight box and has an approximate total weight of 15kg. On a top surface of the box is an operator interface panel 805 by means of which an operator can select the appropriate welding conditions, that have been predetermined to affect the optimum power output and cycle time from the induction power supply unit to the work coil that surrounds the pipe and fitting to be welded. One or more sides of the supply unit 804 comprise a number of conductive fins 806 (for example, aluminium) which act as a heat sink dispersing heat generated internally of the induction power supply unit. The induction power supply unit 804 is also provided with one or more carrying handles 802.

Once the desired characteristics of the output supply voltage have been selected by the operator, the output supply voltage directed to the work coil via an interconnecting lead 807 from the induction power supply unit 804 to a remote output circuit box 808 (approximate weight 1-3kg). The interconnecting lead 807 is designedly long (for example about 3-5 meters). The remote output circuit box 808 includes circuitry to compensate for losses or distortions on the characteristics of the selected output supply voltage incurred in transmission through the interconnecting lead 807. The approximate weight of the remote output circuit is 1-3kg.

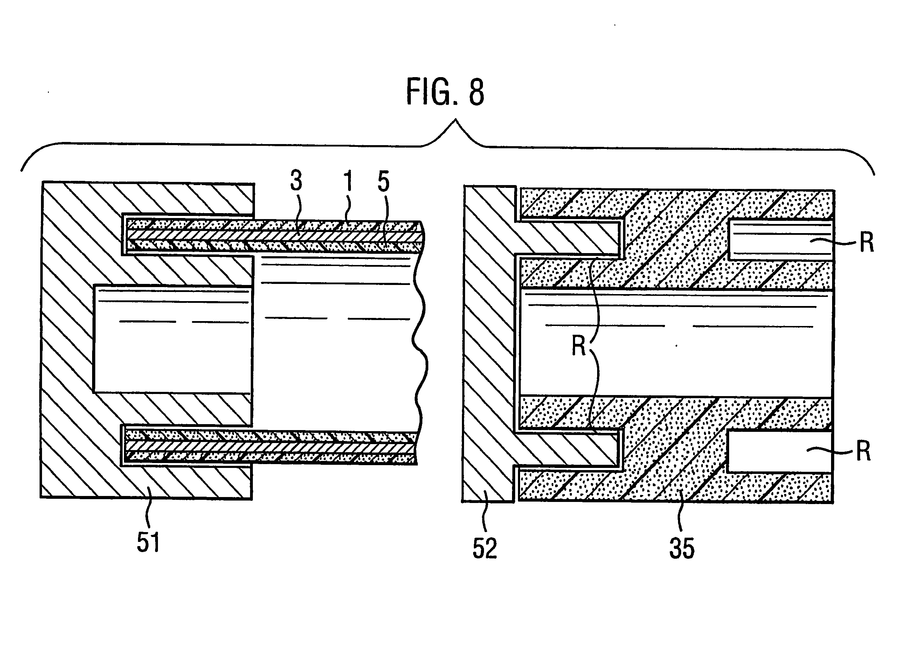

As can be seen from Figure 8, heating tools for use in the socket fusion embodiment of the invention are provided in a complementary pair, one (Figure 8a) configured for receiving an end of a pipe and the other (Figure 8b) configured for inserting into the recess of an end of a coupling. The tools typically comprise a metal with a melting point significantly higher than that of the thermoplastic of the pipe or coupling.

## Claims

1. A method for joining a multi-layered pipe (37) to a coupling (35), the method comprising the steps of:
providing a multi-layered pipe (37), the pipe (37) including at least an outer layer (1) of thermoplastic material, an inner layer (5) of thermoplastic material and a central layer (3) of metal or other conductive material which is no more than 2mm thick, and the pipe (37) having an outside diameter of from 20mm to 110mm;
providing a coupling (35) comprising a unitary piece of thermoplastic material and including a recess (36a, 36b; R) for receiving an end (64, 65) of the pipe (37), the recess (36a, 36b; R) being configured to permit the coupling (35) to contact the pipe (37) when received in the recess (36a, 36b; R);
fitting an end (64, 65) of the pipe (37) into the recess (36a, 36b; R) of the coupling (35);
introducing heat to both the coupling (35) and either the inner layer (5) alone or both the inner and outer layers (5, 1) of the pipe (37) sufficient to cause local melting at the interface between the coupling (35) and either the inner layer (5) alone or both the inner and outer layers (5, 1);
wherein the step of introducing heat involves encircling the assembled end (64, 65) of the pipe (37) and the coupling (35) with an electrically-conductive coil (69), and passing an alternating current through the electrically-conductive coil (69) sufficient to cause mutual induction in the central layer (3) of the pipe (37);
**characterized In that**:
the electrically-conductive coil (69) is provided in the form of a flexible wire which is wound about a cylindrical clamp (61, 62; 71, 72), the clamp (61, 62; 71, 72) having an inner diameter sized to receive and engage the outside diameter of the pipe (37) and the outside diameter of the coupling (35).

2. A method as claimed in claim 1, **characterised in that** the central layer (3) is less than 2mm thick.

3. A method as claimed in any preceding claim, **characterised in that** the inner layer (5) and/or the outer layer (1) comprise a material selected from polyethylene of raised temperature performance ("PE-RT") ethylene/octane copolymers, MDPE, HDPE or PP.

4. A method as claimed in claim 3, **characterised in that** the coupling (35) comprises a material selected from polyethylene of raised temperature performance ("PE-RT") ethylene/octane copolymers, MDPE, HDPE or PP.

5. A method as claimed in any preceding claim, **characterised in that** the outer layer (1) has a thickness in the range from 0.4mm to 5.0mm.

6. A method as claimed in any preceding claim, **characterised in that** the inner layer (5) has a thickness of from 0.4mm to 5.0mm.

7. A method as claimed in any preceding claim, **characterised in that** the recess (36a, 36b; R) of the coupling (35) is an annular recess defined by an outer wall and an inner wall, and the inner wall has a thickness of from 2.0mm to 9.0mm.

8. A method as claimed in claim 7, **characterised in that** the outer wall has a thickness of from about 2.0mm to about 9.0mm.

9. A method as claimed in any preceding claim, **characterised in that** the pipe (37) includes one or more tie layers (2, 4).

10. A method as claimed in any preceding claim, **characterised in that** the central layer (3) of the pipe (37) comprises aluminium or a ferromagnetic material, such as magnetic stainless steel.

11. A method as claimed in claim 10, **characterised in that**, during the heating step, the aluminium interface temperature is maintained at between about 200 °C and 260°C.

12. A method as claimed in claim 10 or 11, **characterised in that** the electrical current is supplied for a period of from 10s to 300s.

13. A method as claimed in any of claims 10 to 12, **characterised in that** the operating frequency of the electrically-conductive coil (69) is between about 40kHz and 60kHz.

14. A method as claimed in any of claims 10 to 13, **characterised in that** the electricity supplied to a main induction power supply unit (804) is at a nominal voltage ranging from 110V to 240V.

15. A method as claimed in any preceding claim, **characterised in that** one or more guides (60) are provided in or on the outer surface of the clamp (61, 62), and the flexible wire of the electrically-conductive coil (69) is received and held in place in the one or more guides (60) in an appropriate configuration.

16. A method as claimed in claim 15, **characterised in that** the one or more guides (60) are provided in the form of a helical groove machined into the outer surface of the clamp (61, 62) at an appropriate depth and with an appropriate pitch for receiving the flexible wire of the electrically-conductive coil (69).

17. A method as claimed in claim 16, **characterised in that** there is further provided a restraining device for holding the coiled flexible wire (69) in its coiled configuration.

18. A method as claimed in claim 17, **characterised in that** the restraining device is a second cylindrical clamp having an internal diameter configured for receiving the outer diameter of the helically-grooved cylindrical clamp (61, 62).

19. A method as claimed in any of claims 1 to 14, **characterised in that** the electrically-conductive coil (69) is provided in the form of two coil parts (76a, 76b) integrally formed in two mating portions of the clamp (71, 72), the clamp (71, 72) having an inner diameter sized to receive the outside diameter of the pipe (37) and the outside diameter of the coupling (35), being engaged around the outside diameter of the pipe (37) and the outside diameter of the coupling (35), and being such that, when the two mating portions of the clamp (71, 72) are brought together, the two coil parts (76a, 76b) interconnect to produce a single induction coil.

20. A method as claimed in any preceding claim, **characterised in that** the coupling (35) comprises a moulded piece of thermoplastic material having at least one open end which is provided with the recess (36a, 36b; R).

## Patentansprüche

1. Ein Verfahren zur Verbindung eines mehrlagigen Rohrs (37) an ein Anschlussstück (35), das Verfahren weist die Schritte auf:
Bereitstellen eines mehrlagigen Rohres (37), wobei das Rohr (37) wenigstens eine äußere Lage (1) aus thermoplastischem Material, eine innere Lage (5) aus thermoplastischem Material und eine zentrale Lage (3) aus Metall oder anderem leitenden Material einschließt, die nicht mehr als 2 mm dick ist, und wobei das Rohr (37) einen Außendurchmesser von 20 mm bis 110 mm hat;
Bereitstellen eines Anschlussstücks (35), das ein einheitliches Stück aus thermoplastischem Material umfasst und eine Aushöhlung (36a, 36b; R) beinhaltet zum Aufnehmen eines Endes (64, 65) des Rohres (37), wobei die Aushöhlung (36a,
36b; R) konfiguriert ist, um dem Anschlussstück (35) den Kontakt mit dem Rohr zu erlauben, wenn dies in der Aushöhlung (36a, 36b; R) aufgenommen ist;
Einpassen eines Endes (64, 65) des Rohres (37) in die Aushöhlung (36a, 36b; R) des Anschlussstücks (35);
Zuführen von Wärme zu sowohl dem Anschlussstück (35) und der inneren Lage (5) allein oder den inneren und äußeren Lagen (5, 1) des Rohres (37), ausreichend, um lokales Schmelzen an der Schnittstelle zwischen dem Anschlussstück (35) und
sowohl der inneren Lage (5) allein oder den inneren und äußeren Lagen (5, 1) zu verursachen;
wobei der Schritt des Zuführens von Wärme das Umfassen des zusammengefügten Endes (64, 65) des Rohres (37) und dem Anschlussstück (35) mit einer elektrisch leitenden Spule (69) einbezieht, und Durchführen eines Wechselstroms durch die elektrisch leitende Spule (69), ausreichend, um gegenseitige Induktion in der zentralen Lage (3) des Rohres (37) zu verursachen, **dadurch gekennzeichnet, dass**:
die elektrisch leitende Spule (69) gestaltet ist in Form eines fexiblen Kabels, das um eine zylindrische Halterung (61, 62; 71, 72) gewunden ist, wobei die Halterung (61, 62, 71, 72) einen inneren Durchmesser hat, um den äußeren Durchmesser des Rohres (37) und den äußeren Durchmesser des Anschlussstücks (35) aufzunehmen und einzurücken.

2. Ein Verfahren nach Anspruch 1, **dadurch gekennzeichnet, dass** die zentrale Lage (3) weniger als 2 mm dick ist.

3. Ein Verfahren nach allen vorangegangenen Ansprüchen, **dadurch gekennzeichnet, dass** die innere Lage (5) und/oder die äußere Lage (1) ein Material umfasst, ausgewählt aus Polyethylen von erhöhten Temperatureigenschaften ("PE-RT") Ethylen-/Octan-Copolymeren, MDPE, HDPE oder PP.

4. Ein Verfahren nach Anspruch 3, **dadurch gekennzeichnet, dass** das Anschlussstück (35) ein Material umfasst, ausgewählt aus Polyethylen von erhöhten Temperatureigenschaften ("PE-RT") Ethylen-/Octan-Copolymeren, MDPE, HDPE oder PP.

5. Ein Verfahren nach allen vorangegangenen Ansprüchen, **dadurch gekennzeichnet, dass** die äußere Lage (1) eine Dicke im Bereich von 0,4 mm bis 5,0 mm hat.

6. Ein Verfahren nach allen vorangegangenen Ansprüchen, **dadurch gekennzeichnet, dass** die innere Lage (5) eine Dicke von 0,4 mm bis 5,0 mm hat.

7. Ein Verfahren nach allen vorangegangenen Ansprüchen, **dadurch gekennzeichnet, dass** die Aushöhlung (36a, 36b; R) des Anschlussstücks (35) eine ringförmige Aushöhlung ist, definiert durch eine äußere Wand und eine innere Wand, und wobei die innere Wand eine Dicke von 2,0 mm bis 9,0 mm hat.

8. Ein Verfahren nach Anspruch 7, **dadurch gekennzeichnet, dass** die äußere Wand eine Dicke von etwa 2,0 mm bis etwa 9,0 mm hat.

9. Ein Verfahren nach allen vorangegangenen Ansprüchen, **dadurch gekennzeichnet, dass** das Rohr (37) einen oder mehrere Haftvermittler (2, 4) einschließt.

10. Ein Verfahren nach allen vorangegangenen Ansprüchen, **dadurch gekennzeichnet, dass** die zentrale Lage (3) des Rohres (37) Aluminium oder ein ferromagnetisches Material umfasst, wie magnetischen Edelstahl.

11. Ein Verfahren nach Anspruch 10, **dadurch gekennzeichnet, dass** während des Erwärmungsschrittes die Temperatur an der Aluminiumschnittstelle zwischen etwa 200 °C und 260 °C gehalten wird.

12. Ein Verfahren nach Anspruch 10 oder 11, **dadurch gekennzeichnet, dass** der elektrische Strom für eine Zeitspanne von 10 s bis 300 s zugeführt wird.

13. Ein Verfahren nach allen Ansprüchen 10 bis 12, **dadurch gekennzeichnet, dass** die Betriebsfrequenz der elektrisch leitenden Spule (69) zwischen etwa 40 kHz und 60 kHz liegt.

14. Ein Verfahren nach allen Ansprüchen 10 bis 13, **dadurch gekennzeichnet, dass** die Elektrizität, die einer Hauptstromversorgungseinheit (804) zugeführt wird, bei einer Nominalspannung von 110V bis 240V liegt.

15. Ein Verfahren nach allen vorangegangenen Ansprüchen, **dadurch gekennzeichnet, dass** eine oder mehr Führungen (60) in oder auf der äußeren Oberfläche der Halterung (61, 62) zur Verfügung stehen, und das flexible Kabel der elektrisch leitenden Spule (69) aufgenommen und am Platz gehalten ist in der einen oder mehreren Führungen (60) in angemessener Konfiguration.

16. Ein Verfahren nach Anspruch 15, **dadurch gekennzeichnet, dass** die eine oder mehr Führungen (60) in Form einer Spiralnut vorliegen, gefräst in die äußere Oberfläche der Halterung (61, 62) in angemessener Tiefe und mit angemessenem Abstand, um das flexible Kabel der elektrisch leitenden Spule (69) aufzunehmen.

17. Ein Verfahren nach Anspruch 16, **dadurch gekennzeichnet, dass** weiterhin eine Rückhaltevorrichtung vorgesehen ist, um das aufgespulte flexible Kabel (69) in seiner aufgespulten Konfiguration zu halten.

18. Ein Verfahren nach Anspruch 17, **dadurch gekennzeichnet, dass** die Rückhaltevorrichtung eine zweite zylindrische Halterung ist, die einen inneren Durchmesser hat, der konfiguriert ist, um den äußeren Durchmesser der wendelförmig gefurchten zylindrischen Halterung (61, 62) aufzunehmen.

19. Ein Verfahren nach allen Ansprüchen 1 bis 14, **dadurch gekennzeichnet, dass** die elektrisch leitende Spule (69) in Form von zwei Spulenteilen (76a, 76b), integral geformt aus zwei Anschlussteilen der Halterung (71, 72) vorliegt, wobei die Halterung (71, 72) einen inneren Durchmesser aufweist, um den äußeren Durchmesser des Rohres (37) und den äußeren Durchmesser des Anschlussstücks (35) aufzunehmen, verbunden um den äußeren Durchmesser des Rohres (37) und den äußeren Durchmesser des Anschlussstücks (35), derart wenn die zwei Anschlussteile der Halterung (71, 72) zusammengeführt werden, verbinden sich die zwei Spulenteile (76a, 76b) zu einer einzelnen Induktionsspule.

20. Ein Verfahren nach allen vorangegangenen Ansprüchen, **dadurch gekennzeichnet, dass** das Anschlussstück (35) ein profiliertes Stück thermoplastischen Materials umfasst, das wenigstens ein offenes Ende besitzt, das mit der Aushöhlung (36a, 36b; R) ausgestattet ist.

## Revendications

1. Procédé de raccordement d'un conduit multicouche (37) à un couplage (35), le procédé comprenant les étapes consistant à :
fournir un conduit multicouche (37), le conduit (37) incluant au moins une couche externe (1) en matière thermoplastique, une couche interne (5) en matière thermoplastique et une couche centrale (3) en métal ou une autre matière conductrice qui n'est pas plus épaisse que 2 mm, et le conduit (37) ayant un diamètre extérieur de 20 mm à 110 mm ;
formant un couplage (35) comprenant une pièce unitaire de matière thermoplastique et incluant un évidement (36a, 36b ; R) permettant de recevoir une extrémité (64, 65) du conduit (37), l'évidement (36a, 36b ; R) étant configuré pour permettre au couplage (35) de venir en contact avec le conduit (37) lorsqu'il est reçu dans l'évidement (36a, 36b ; R) ;
ajuster une extrémité (64, 65) du conduit (37) dans l'évidement (36a, 36b ; R) du couplage (35) ;
introduire de la chaleur à la fois dans le couplage (35) et soit la couche interne (5) seule, soit les deux couches interne et externe (5, 1) du conduit (37) suffisamment pour entraîner une fusion locale à l'interface entre le couplage (35) et soit la couche interne (5) seule, soit les deux couches interne et externe (5, 1) ;
dans lequel l'étape d'introduction de la chaleur implique l'encerclement de l'extrémité assemblée (64, 65) du conduit (37) et du couple (35) avec une bobine électriquement conductrice (69), et le fait de faire passer un courant alternatif dans la bobine électriquement conductrice (69) suffisant pour entraîner une induction mutuelle dans la couche centrale (3) du conduit (37) **caractérisé en ce que**
la bobine électriquement conductrice (69) est fournie sous forme d'un fil flexible qui est enroulé auteur d'une pince cylindrique (61, 62 ; 71, 72), la pince (61, 62 ; 71, 72) ayant un diamètre interne dimensionné pour recevoir et engager le diamètre extérieur du conduit (37) et le diamètre extérieur du couplage (35).

2. Procédé selon la revendication 1, **caractérisé en ce que** la couche centrale (3) est épaisse de moins de 2 mm.

3. Procédé selon l'une quelconque des revendications précédentes, **caractérisé en ce que** la couche interne (5) et/ou la couche externe (1) comprennent une matière choisie parmi le poly(éthylène) de performance de température élevée (« PE-RT »), les copolymères d'éthylène/octane, le PEMD, le PEHD ou le PP.

4. Procédé selon la revendication 3, **caractérisé en ce que** le couplage (3b) comprend une matière choisie parmi le poly(éthylène) de performance de température élevée (« PE-RT »), les copolymères d'éthylène/octane, le PEMD, le PEHD ou le PP.

5. Procédé selon l'une quelconque des revendications précédentes, **caractérisé en ce que** la couche externe (1) a une épaisseur dans la plage de 0,4 mm à 5,0 mm.

6. Procédé selon l'une quelconque des revendications précédentes, **caractérisé en ce que** la couche interne (5) a une épaisseur dans la plage de 0,9 mm à 5,0 mm.

7. Procédé selon l'une quelconque des revendications précédentes, **caractérisé en ce que** l'évidement (36a, 36b ; R) du couplage (35) est un évidement annulaire défini par une paroi externe et une paroi interne, et la paroi interne a une épaisseur de 2,0 mm à 9,0 mm.

8. Procédé selon la revendication 7, **caractérisé en ce que** la paroi externe a une épaisseur d'environ 2,0 mm à environ 9,0 mm.

9. Procédé selon l'une quelconque des revendications précédentes, **caractérisé en ce que** le conduit (37) inclut une ou plusieurs couches de jonction (2, 4).

10. Procédé selon l'une quelconque des revendications précédentes, **caractérisé en ce que** la couche centrale (3) du conduit (37) comprend de l'aluminium ou une matière ferromagnétique, telle que l'acier inoxydable magnétique.

11. Procédé selon la revendication 10, **caractérisé en ce que**, pendant l'étape de chauffage, la température d'interface d'aluminium est maintenue à une valeur comprise entre environ 200 °C et 260 °C.

12. Procédé selon la revendication 10 ou 11, **caractérisé en ce que** le courant électrique est fourni pendant une durée de 10 s à 300 s.

13. Procédé selon l'une quelconque des revendications 10 à 12, **caractérisé en ce que** la fréquence de fonctionnement de la bobine électriquement conductrice (69) est comprise entre environ 40 kHz et 60 kHz.

14. Procédé selon l'une quelconque des revendications 10 à 13, **caractérisé en ce que** l'électricité fournie à l'unité d'alimentation électrique d'induction principale (804) est une tension nominale allant de 110 V à 240 V.

15. Procédé selon l'une quelconque des revendications précédentes, **caractérisé en ce que** un ou plusieurs guides (60) sont disposés dans ou sur la surface externe de la pince (61, 62), et le fil flexible de la bobine électriquement conductrice (69) est reçu et maintenu en place dans les un ou plusieurs guides (60) dans une configuration appropriée.

16. Procédé selon la revendication 15, **caractérisé en ce que** les un ou plusieurs guides (60) sont fournis sous la forme d'une rainure hélicoïdale usinée dans la surface externe de la pince (61, 62) à une profondeur appropriée et avec un pas approprié permettant de recevoir le fil flexible de la bobine électriquement conductrice (69).

17. Procédé selon la revendication 16, **caractérisé en ce qu'**il est en outre prévu un dispositif de retenue permettant de maintenir le fil flexible embobiné (69) dans sa configuration embobinée.

18. Procédé selon la revendication 17, **caractérisé en ce que** le dispositif de retenue est une seconde pince cylindrique ayant un diamètre interne configuré pour recevoir le diamètre externe de la pince cylindrique rainurée hélicoïdalement (61, 62).

19. Procédé selon l'une quelconque des revendications 1 à 14, **caractérisé en ce que** la bobine électriquement conductrice (69) est fournie sous la forme de deux parties de bobine (76a, 76b) formées solidairement en deux portions d'accouplement de la pince (71, 72), la pince (71, 72) ayant un diamètre interne dimensionné pour recevoir le diamètre extérieur du conduit (37) et le diamètre extérieur du couplage (35), étant engagée autour du diamètre extérieur du conduit (37) et le diamètre extérieur du couplage (35), et étant telle que, lorsque les deux portions d'accouplement de la pince (71, 72) sont amenées ensemble, les deux parties de bobine (76a, 76b) se connectent mutuellement pour produire une seule bobine d'induction.

20. Procédé selon l'une quelconque des revendications précédentes, **caractérisé en ce que** le couplage (35) comprend une pièce moulée de matière thermoplastique ayant au moins une extrémité ouverte qui est pourvue de l'évidement (36a, 36b ; R).
